Europäisches Patentamt

European Patent Office

Office européen des brevets

(19)

(11) Veröffentlichungsnummer: **0 298 260 B1**

# (12) EUROPÄISCHE PATENTSCHRIFT

(45) Veröffentlichungstag der Patentschrift: **15.01.92**

(21) Anmeldenummer: **88109059.1**

(22) Anmeldetag: **07.06.88**

(51) Int. Cl.⁵: **G02B 26/02**

---

(54) **Optischer Schalter.**

---

(30) Priorität: **10.06.87 DE 3719358**
**09.12.87 DE 3741761**

(43) Veröffentlichungstag der Anmeldung:
**11.01.89 Patentblatt 89/02**

(45) Bekanntmachung des Hinweises auf die
Patenterteilung:
**15.01.92 Patentblatt 92/03**

(84) Benannte Vertragsstaaten:
**AT BE CH DE FR GB IT LI NL SE**

(56) Entgegenhaltungen:
**EP-A- 0 098 815**
**WO-A-85/01803**
**DE-A- 3 437 489**

**PATENT ABSTRACTS OF JAPAN, Band 8, Nr.**
**133 (P-281)[1570], 20. Juni 1984, Seite 117 P**
**281; & JP-A-59 36 201**

(73) Patentinhaber: **SIEMENS AKTIENGESELL-**
**SCHAFT**
**Wittelsbacherplatz 2**
**W-8000 München 2(DE)**

(72) Erfinder: **Volkmar, Ralf-Reiner**
**Triftstrasse 39**
**W-1000 Berlin 65(DE)**
Erfinder: **Eicher, Joachim, Dipl. Ing.**
**Nestorstr. 5**
**W- 1000 Berlin 31(DE)**
Erfinder: **Meyer, Frank, Dipl. Ing.**
**Kommandantenstr. 60**
**W 1000 Berlin 61(DE)**

## Beschreibung

Die Erfindung bezieht sich auf einen optischen Schalter mit einem translatorisch bewegbaren Schaltstück und mit wenigstens zwei an dem Schaltstück befestigten, mit Flachseiten quer zur Bewegungsrichtung des Schaltstückes ausgerichteten und zueinander parallel verlaufenden ersten Federblechstreifen.

Ein solcher optischer Schalter ist schon aus der DE-A1-34 37 489 bekannt. Bei diesem Schalter ist ein dort als Schaltteil bezeichnetes Schaltstück über zwei zueinander parallele Blattfedern mit dem Gehäuse des Schalters verbunden. Die beiden Blattfedern haben gleiche Wirkungslänge, so daß das Schaltstück eine Längsseite eines Parallelogramms bildet und demzufolge in jeder Lage quer zum Verlauf von ortsfest fixierten Endabschnitten von lichtleitenden Fasern gehalten wird. Dadurch ist gewährleistet, daß sich optische Koppelflächen in den Schaltstellungen des Schaltstückes mit aufeinander ausgerichteten Achsen gegenüberstehen. Dies ist eine wichtige Voraussetzung zur Erzielung eines möglichst dämpfungsarmen Übertritts von optischen Signalen von ortfesten Koppelflächen zu am Schaltstück fixierten optischen Koppelflächen und umgekehrt. Bei dem bekannten Schalter läßt sich jedoch eine Änderung des Abstandes dieser optischen Koppelflächen voneinander bei einer Bewegung des Schaltstückes nicht vermeiden.

An einem solchen translatorisch bewegbaren Schaltstück können aber auch Umlenkprismen, Ablenkspiegel oder ähnliches fixiert sein, wie dies z. B. aus der Japanischen Offenlegungsschrift 58-21 224 (A) (Appl. No. 56-11 97 09) bekannt ist. Das Schaltstück bewegt dabei ein Umkehrprisma in den oder aus dem Strahlengang zwischen ortsfesten optischen Koppelflächen, die durch Linsensysteme realisiert sind, so daß dadurch entweder über eine lichtleitende Faser ankommende optische Signale einem optischen Empfänger (optoelektronischer Wandler) und von einem optischen Sender (elektrooptischer Wandler) ausgehende optische Signale als abgehende optische Signale einer weiteren lichtleitenden Faser zugeführt oder die über die eine Faser ankommenden optischen Signale direkt in die weitere Faser als abgehende optische Signale umgelenkt werden.

Aufgabe vorliegender Erfindung ist es, einen optischen Schalter der eingangs genannten Art so auszubilden, daß die Parallelführung des Schaltstückes wesentlich verbessert wird.

Erfindungsgemäß ergibt sich die Lösung dieser Aufgabe dadurch, daß mit vom Schaltstück abgewandten Enden der ersten Federblechstreifen jeweils Enden von zweiten Federblechstreifen über freibewegliche Querstücke verbunden sind, und daß die zweiten Streifen mit ihren Flachseiten neben den ersten Streifen vorgesehen und mit von der Verbindung mit den ersten Streifen abgewandten Abschnitten unter Bildung von mit den ersten Streifen gleichen, freien Wirkungslängen gehäusefest verankert sind.

Bei einer Bewegung des Schaltstückes werden dadurch einander zugeordnete erste und zweite Federblechstreifen mehr oder weniger stark auseinandergespreizt oder von einer vorgespreizten Position ausgehend zusammengedrückt, wobei sich die Verbindungsstelle einander zugeordneter erster und zweiter Federblechstreifen mehr oder weniger stark parallel zur Strahlrichtung der den Schaltspalt zwischen Schaltstück und ortsfesten optischen Koppelflächen überbrückenden optischen Signale den Befestigungsstellen der ersten Streifen am Schaltstück und der gehäusefesten Verankerung der zweiten Streifen nähert oder von diesen entfernt. Dadurch wird das Schaltstück auf einer geraden Bahn quer zur Strahlrichtung der den Schaltspalt überbrückenden optischen Signale gehalten, so daß der Abstand zwischen ortsfesten optischen Koppelflächen und diesen in bestimmten Schaltstellungen des Schaltstücks gegenüberstehenden, am Schaltstück fixierten optischen Koppelflächen konstant bleibt.

In weiterer Ausgestaltung der Erfindung kann vorgesehen sein, daß jeweils drei Streifen nebeneinander vorgesehen sind, von denen jeweils die beiden äußeren zusammen einen ersten oder zweiten Federblechstreifen realisieren, während der mittlere Streifen den jeweils anderen (zweiten oder ersten) Streifen bildet.

Auf diese Weise wird die Aufhängung des Schaltstückes an den Federblechstreifen zusätzlich stabilisiert.

Weiter kann vorgesehen sein, daß die Querstücke einstückig und materialgleich mit den ersten und zweiten Streifen ausgebildet sind.

Vorteilhaft können dadurch die mit wenigstens einem Querstück zusammenhängenden ersten und zweiten Federblechstreifen in einem Arbeitsgang, z. B. durch Stanzen, aus einem Stück Federblech herausgearbeitet werden.

Es ist auch vorteilhaft, daß miteinander verbundene erste und zweite Streifen in einer ersten Schaltstellung gegeneinander unter einem bestimmten Spreizwinkel vorgespreizt oder vorgebogen sind, und daß in einer zweiten Schaltstellung des Schaltstückes dieser Spreizwinkel vergrößert oder verkleinert ist.

Hierdurch wird bei der Bewegung des Schaltstückes das "Durchfahren" eines spannungslosen Zustandes der Federblechstreifen vermieden, wodurch insbesondere keine ungünstigen Wechselbeanspruchungen auftreten können.

Nachfolgend werden Ausführungsbeispiele der Erfindung anhand von sechs Figuren noch näher erläutert.

Dabei zeigen unter Weglassung aller nicht unbedingt zum Verständnis des Erfindungsgegenstandes erforderlichen Einzelheiten und vergrößert,

FIG 1 den optischen Schalter von oben gesehen, mit am Schaltstück fixierten Endabschnitten lichtleitender Fasern,

FIG 2 eine Seitenansicht des optischen Schalters von FIG 1,

FIG 3 und FIG 4 die Schaltstellungen eines optischen Schalters, bei dem das Schaltstück Umlenkprismen trägt, und

FIG 5 und FIG 6 die Schaltstellungen eines optischen Schalters entsprechend FIG 3 und FIG 4, bei dem jedoch anstelle von lichtleitenden Fasern, die optoelektronische bzw. elektrooptische Wandler mit dem Schalter verbinden, diese Wandler unmittelbar mit optischen Koppelflächen des Schalters verbunden sind.

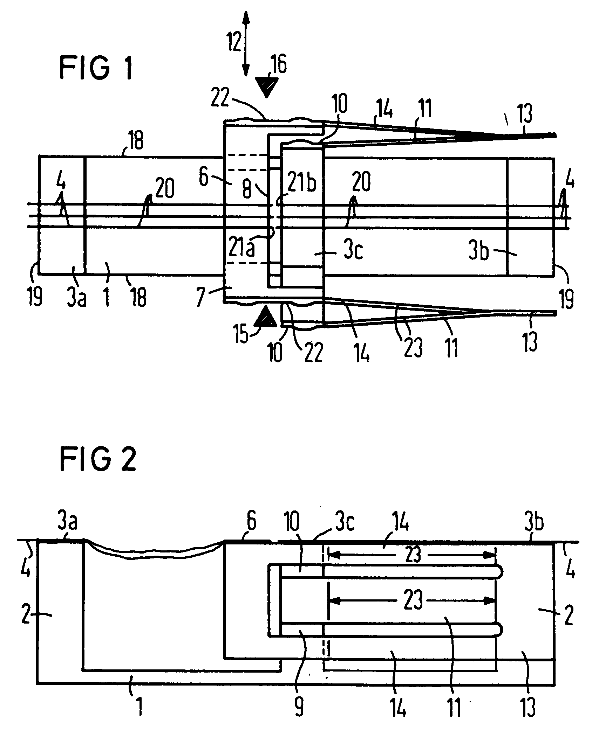

Der optische Schalter entsprechend FIG 1 und FIG 2 weist eine massive, z. B. aus Messing bestehende, schmale rechteckförmige Bodenplatte 1 auf. An den beiden Schmalseiten 19 der Bodenplatte 1 erheben sich von der Bodenplatte mit dieser einstückig zusammenhängende, etwa quaderförmige Körper 2. Von der Bodenplatte abgewandte plane Seiten dieser Körper bilden Plattformen 3a und 3b. An diesen Plattformen sind geordnet nebeneinander lichtleitende Fasern 4, z. B. mittels Klebstoff, fixiert. Die Fasern 4 sind in einer Ebene nebeneinander so angeordnet, daß die Abstände zwischen benachbarten Fasern gleich groß sind.

Von der einen Plattform 3a verlaufen die Fasern 4 zu der oberen planen Seite 6 eines prismatischen Schaltstückes 7 und sind dort mit Endabschnitten 20 geordnet nebeneinander fixiert. Die an dem Schaltstück 7 fixierten Fasern 4 bilden eine erste Gruppe von lichtleitenden Fasern, deren Stirnseiten 21a über eine Kante 8 des Schaltstückes 7, welche von der Plattform 3a abgewandt ist, geringfügig vorstehen.

Die an der Plattform 3b fixierten Fasern einer zweiten Fasergruppe sind in Richtung zu den Fasern der ersten Gruppe an einer weiteren Plattform 3c befestigt, welche genau in der gleichen Ebene wie die Seite 6 des Schaltstückes 7 liegt.

An dem die Plattform 3c bildenden weiteren Körper 9, der einstückig mit der Bodenplatte 1 verbunden ist, sind an voneinander abgewandten, zu Längsseiten 18 der Bodenplatte 1 parallelen Seiten 10 Blattfederstreifen 11 fixiert. Die Blattfederstreifen 11 erstrecken sich mit ihren Flachseiten quer zur Bewegungsrichtung 12 des Schaltstückes 7 im wesentlichen parallel zum Verlauf der lichtleitenden Fasern 4 und gehen etwa in Höhe des Körpers 2 mit der Plattform 3b in ein freibewegliches Querstück 13 über, das einstückig mit den Federblechstreifen 11 zusammenhängt.

Neben jedem dieser Federblechstreifen 11 sind jeweils zwei weitere Federblechstreifen 14 vorgesehen, die ebenfalls mit dem Querstück 13 einstückig zusammenhängen und an voneinander abgewandten Seiten 22 des Schaltstücks 7 befestigt sind. Die Seiten 22 sind parallel zu den Seiten 10 gerichtet.

Die zunächst in einer einzigen Ebene verlaufenden Federblechstreifen 11, 14 auf jeder Seite des Schalters werden durch eine Verschiebung des Schaltstückes 7, quer zu den Längsseiten 18 der Bodenplatte 1, vorgespreizt und dann das Schaltstück 7 an einem ersten Anschlag 15 entgegen der Federwirkung der Federblechstreifen 11, 14 abgestützt.

In dieser Position des Schaltstückes 7 sind die am Schaltstück 7 fixierten Fasern 4 mit ihren Stirnseiten 21a den Stirnseiten 21b der an der Plattform 3c fixierten Fasern paarweise mit ganz geringem Abstand genau gegenübergestellt.

Wird das Schaltstück 7 von dieser Schaltstellung, in der es dem Anschlag 15 anliegt, in eine zweite Schaltstellung gebracht, z. B. mit Hilfe einer nicht dargestellten elektromagnetischen Vorrichtung, in der es sich an dem Anschlag 16 abstützt, so werden dadurch die Streifen 14 und 11 jeweils noch weiter auseinandergespreizt. In dieser zweiten Schaltstellung liegen z.B. die Stirnseiten 21 von nur noch zwei Fasern 4 einander gegenüber, nämlich die der in der ersten Schaltstellung diagonal am weitesten voneinander entfernten äußeren Fasern der beiden Fasergruppen.

Durch die Befestigung des Schaltstückes 7 an den Streifen 14 und dieser Streifen an den Streifen 11, die wiederum am ortsfesten Körper fixiert sind, bewegt sich das Schaltstück 7 beim Übergang von der ersten in die zweite Schaltposition entlang einer quer zum Verlauf der Fasern 4 gerichteten Geraden, weil die Wirkungslängen der Streifen 11 und 14 gleich groß sind und auch die Federwirkung der beiden Streifen 14 derjenigen des Streifens 11 entspricht (die Streifen 14 sind nur halb so breit, wie der Streifen 11).

Die Querstücke 13, die jeweils zweite Steifen 11 und erste Streifen 14 miteinander verbinden, bewegen sich beim Übergang des Schaltstückes von der ersten Schaltstellung in die zweite Schaltstellung in Richtung zu den Befestigungsstellen der Streifen 11, 14, so daß bei zunehmender Spreizung der Streifen 11 und 14 die Höhe des gleichschenkeligen Dreiecks vermindert wird, das die freien Wirkungslängen 23 der Streifen 11 und 14 als Seiten hat.

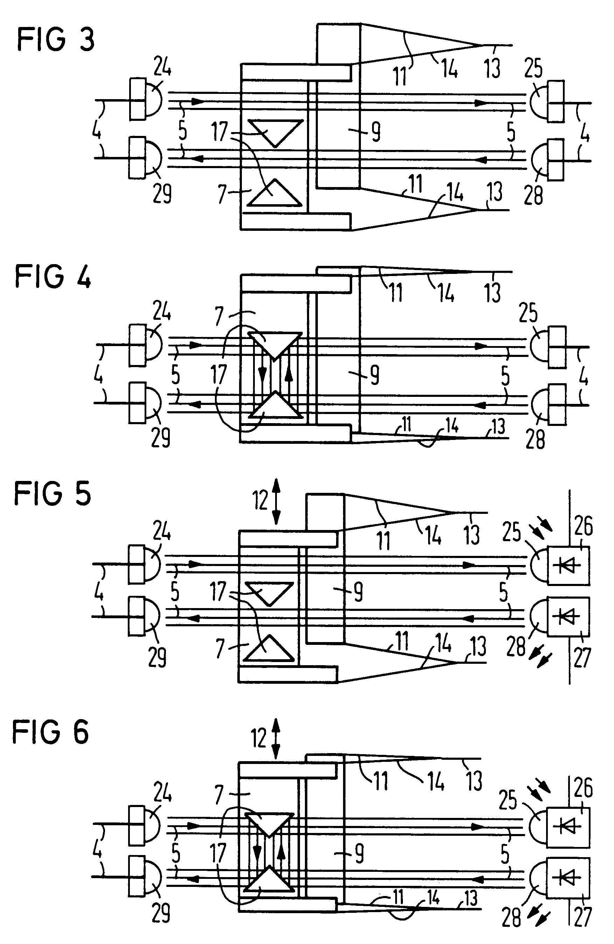

Bei den Ausführungsbeispielen entsprechend FIG 3, FIG 4, FIG 5 und FIG 6 sind anstelle von Faserendabschnitten Umlenkprismen 17 am Schaltstück 7 fixiert, während die mit gleichen Bezugszeichen versehenen Teile der Schalter entsprechend FIG 3, FIG 4, FIG 5 und FIG 6 denjenigen Teilen in ihrer Funktion gleichen, die zu dem in FIG 1 und FIG 2 dargestellten Schalter gehören.

Die Umlenkprismen 17 sind an dem Schaltstück 7 so befestigt, daß in einer ersten Schaltstellung des Schalters (FIG 3 und FIG 5) optische Signale, die von einer fernen Teilnehmerstation über eine Faser 4 ankommen, von einem Linsenbaustein 24, der einer Endfläche der ankommenden Faser 4 vorgeschaltet ist, in Form aufgeweiter Parallelstrahlen über das Schaltstück 7 hinweg und an den Umlenkprismen 17 vorbei in einen Linsenbaustein 25 eingestrahlt werden, der diese optischen Signale einer abgehenden Faser 4 bzw. einem dem Linsenbaustein 25 zugeordneten optoelektronischen Wandler 26 zuleitet, und die von einem elektrooptischen Wandler 27 bzw. einer ankommenden Faser 4 einem Linsenbaustein 28 zugeführten optischen Signale von diesem über das Schaltstück 7 hinweg in Gegenrichtung in einen Linsenbaustein 2 eingestrahlt werden, der einer Endfläche einer abgehenden Faser 4 vorgeschaltet ist.

In einer zweiten Schaltstellung des Schalters (FIG 4 und FIG 6) ragen die Umlenkprismen 17 derart in den Strahlengang 5 zwischen den Linsenbausteinen 24 und 25, sowie 28 und 29, daß der von dem Baustein 24 kommende Strahl in den Baustein 29 und der vom Baustein 28 kommende Strahl in den Baustein 25 abgelenkt wird.

Dadurch wird das vom elektrooptischen Wandler 27 ausgesandte optische Signal dem optoelektronischen Wandler 26 zugeführt, entweder unmittelbar, weil die Wandler mit den Linsenbausteinen 25 und 28 konstruktiv verbunden sind, oder mittelbar, wenn man sich die Linsenbausteine 25 und 28 über lichtleitende Fasern 4 mit solchen Wandlern verbunden denkt.

Zugleich werden in dieser Schaltstellung des Schaltstückes 7 über eine Faser 4 ankommende und vom Linsenbaustein 24 auf ein Umlenkprisma 17 abgestrahlte optische Signale über ein zweites mit dem Schaltstück 7 verbundenes Prisma 17 dem Linsenbaustein 29 zugeführt, der diese Signale in eine abgehende Faser 4 einspeist.

In einer ersten Schaltstellung werden daher bei einem Schalter nach FIG 3 bzw. FIG 5 ankommende optische Signale einem optoelektronischen Wandler zugeführt und von einem elektrooptischen Wandler ausgehende Signale einer abgehenden Faser 4 zugeleitet.

In der zweiten Schaltstellung wird dagegen die ankommende Faser mit der abgehenden Faser optisch gekoppelt und der optische Sender unmittelbar mit dem optischen Empfänger z.B. derselben Teilnehmerstation verbunden (FIG 4 bzw. FIG 6).

Durch die bauliche Vereinigung der optischen Sender und Empfänger mit den zugeordneten optischen Koppelflächen werden Faserverbindungen eingespart.

Durch eine steckbare Ausbildung der Linsenbausteine 24, 25, 28 und 29 ist es unschwer möglich, z.B. mit Hilfe einer Präzisionssteckverbindung zwischen dem Schaltergehäuse und den Linsenbausteinen die genaue Ausrichtung der Linsenbausteine zu gewährleisten.

**Patentansprüche**

1. Optischer Schalter mit einem Gehäuse mit einem translatorisch bewegbaren Schaltstück (7) und mit wenigstens zwei an dem Schaltstück befestigten, mit Flachseiten quer zur Bewegungsrichtung (12) des Schaltstückes (7) ausgerichteten und zueinander parallel verlaufenden ersten Federblechstreifen (14), **dadurch gekennzeichnet,** daß mit vom Schaltstück (7) abgewandten Enden der ersten Federblechstreifen (14) jeweils Enden von zweiten Federblechstreifen (11) über freibewegliche Querstücke (13) verbunden sind, und daß die zweiten Streifen (11) mit ihren Flachseiten neben den ersten Streifen (14) vorgesehen und mit von der Verbindung mit den ersten Streifen (14) abgewandten Abschnitten unter Bildung von mit den ersten Streifen (14) gleichen, freien Wirkungslängen (23) gehäusefest verankert sind.

2. Optischer Schalter nach Anspruch 1, **dadurch gekennzeichnet,** daß jeweils drei Streifen (11, 14) nebeneinander vorgesehen sind, von denen jeweils die beiden äußeren (14) zusammen einen ersten oder zweiten Federblechstreifen realisieren, während der mittlere Streifen (11) den jeweils anderen (zweiten oder ersten) Streifen bildet.

3. Optischer Schalter nach Anspruch 1 oder Anspruch 2, **dadurch gekennzeichnet,** daß die Querstücke (13) einstückig und materialgleich mit den ersten und zweiten Streifen (11, 14) ausgebildet sind.

4. Optischer Schalter nach einem der vorhergehenden Ansprüche, **dadurch gekennzeichnet,** daß miteinander verbundene erste und zweite Streifen in einer ersten Schaltstellung gegeneinander unter einem bestimmten Spreizwinkel vorgespreizt oder vorgebogen sind, und daß in einer zweiten Schaltstellung des Schaltstückes dieser Spreizwinkel vergrößert oder verkleinert ist.

**Claims**

1. Optical switch having a housing with a translatorily movable switch piece (7) and having at least two first spring strips (14) secured to the switch piece, aligned with plane surfaces transverse to the direction of movement (12) of the switch piece (7) and extending parallel to each other, characterised in that ends of second spring strips (11) are respectively connected to ends of the first spring strips (14) remote from the switch piece (7) by means of freely-movable cross pieces (13), and in that the second strips (11) are provided with their plane surfaces next to the first strips (14) and are firmly anchored, with sections remote from the connection to the first strips (14), to the housing, forming free effective lengths (23) equal to the first strips (14).

2. Optical switch according to claim 1, characterised in that three strips (11, 14) are respectively provided next to each other, the two outer (14) of which together respectively form a first or second spring strip whilst the middle strip (11) forms the respective other (second or first) strip.

3. Optical switch according to claim 1 or claim 2, characterised in that the cross-pieces (13) are of one-piece construction and are of the same material as the first and second strips (11, 14).

4. Optical switch according to one of the preceding claims, characterised in that first and second strips joined together are pre-splayed or pre-bent in a first switch position at a specific splayed angle with respect to each other, and in that in a second switch position of the switch piece this splayed angle is enlarged or reduced.

**Revendications**

1. Commutateur optique comportant un boîtier pourvu d'un élément de commutation (7) déplaçable en translation et d'au moins deux premières bandes de tôle formant ressorts (14), parallèles entre elles, qui sont fixées à l'élément de commutation et dont des faces planes sont ou sont orientées transversalement par rapport à la direction de déplacement (12) de l'élément de commutation (7), caractérisé par le fait que des extrémités de secondes bandes de tôles formant ressorts (11) sont raccordées, par l'intermédiaire d'éléments transversaux librement mobiles (13), à des extrémités, tournées à l'opposé de l'élément de commutation (7), des premières bandes de tôles formant ressorts (14), et que les secondes bandes (11) sont disposées de telle sorte que leurs faces planes sont situées à côté des premières bandes (14), et sont ancrées de façon fixe dans le boîtier par des sections tournées à l'opposé de la liaison avec les premières bandes (4), en formant des longueurs actives libres (23), identiques aux premières bandes (14).

2. Commutateur optique suivant la revendication 1, caractérisé par le fait que respectivement trois bandes (11,14) sont disposées côte-à-côte, les deux bandes extérieures (14) constituant ensemble une première ou une seconde bande formant ressort, tandis que la bande médiane (11) constitue respectivement l'autre (seconde ou première) bande.

3. Commutateur optique suivant la revendication 1 ou 2, caractérisé par le fait que les éléments transversaux (13) sont réalisés d'un seul tenant avec les première et seconde bandes (11,14) et sont formés par le même matériau que ces bandes.

4. Commutateur optique suivant l'une des revendications précédentes, caractérisé par le fait que des première et seconde bandes reliées entre elles sont préalablement écartées ou repliées, que lorsque l'élément de commutation est dans une première position de commutation, les première et seconde bandes reliées entre elles sont préalablement écartées ou repliées en faisant entre elles un angle d'écartement déterminé et que lorsque l'élément de commutation est dans une seconde position de commutation, cet angle d'écartement est accru ou réduit.

FIG 1

FIG 2

# FIG 3

# FIG 4

# FIG 5

# FIG 6

7